(19) **Europäisches Patentamt / European Patent Office / Office européen des brevets**

(11) **EP 4 693 167 A1**

(12) **EUROPEAN PATENT APPLICATION**
published in accordance with Art. 153(4) EPC

(43) Date of publication:
**11.02.2026 Bulletin 2026/07**

(21) Application number: **24814474.3**

(22) Date of filing: **29.05.2024**

(51) International Patent Classification (IPC):
**G06T 5/50** (2006.01)

(52) Cooperative Patent Classification (CPC):
**G06N 3/0464; G06N 3/08; G06T 5/50; H04N 19/61**

(86) International application number:
**PCT/CN2024/096013**

(87) International publication number:
**WO 2024/245277 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.05.2023 CN 202310615118**

(71) Applicant: **Huawei Technologies Co., Ltd.
Shenzhen, Guangdong 518129 (CN)**

(72) Inventors:
• **QIAN, Sheng**
  **Shenzhen, Guangdong 518129 (CN)**
• **YU, Dequan**
  **Shenzhen, Guangdong 518129 (CN)**
• **ZHAO, Yin**
  **Shenzhen, Guangdong 518129 (CN)**

(74) Representative: **Grünecker Patent- und
Rechtsanwälte
PartG mbB
Leopoldstraße 4
80802 München (DE)**

(54) **NONLINEAR PROCESSING METHOD AND APPARATUS FOR IMAGE COMPRESSION**

(57) This application provides a non-linear processing method and apparatus for image compression. The non-linear processing method for image compression in this application includes: obtaining a to-be-processed first image feature; and performing non-linear transformation processing on the first image feature to obtain a processed image feature, where the non-linear transformation processing sequentially includes first convolution processing, second convolution processing, and an element-wise multiplication operation. This application can expand a receptive field, reduce a calculation amount, further enhance local attention, maintain model performance, and effectively balance computing power.

600

Obtain a to-be-processed first image feature — 601

Perform non-linear transformation processing on the first image feature to obtain a processed image feature, where the non-linear transformation processing sequentially includes first convolution processing, second convolution processing, and an element-wise multiplication operation — 602

FIG. 6

EP 4 693 167 A1

## Description

## TECHNICAL FIELD

This application relates to the field of image processing technologies, and in particular, to a non-linear processing method and apparatus for image compression.

## BACKGROUND

As a convolutional neural network (convolution neural network, CNN) outperforms a conventional algorithm in computer vision tasks such as image recognition and target detection, more researchers start to explore deep learning-based image/video compression methods. Some researchers design an end-to-end deep learning image/video compression algorithm. For example, modules such as an encoding network, an entropy estimation network, an entropy encoding network, an entropy decoding network, and a decoding network are optimized as a whole. The encoding network and the decoding network may also be referred to as a transformation module and an inverse transformation module, and generally include a convolutional layer and a non-linear transformation unit.

The non-linear transformation unit is one of basic components of an image/video compression network. A non-linear characteristic of the non-linear transformation unit directly affects rate-distortion performance of the compression algorithm. Therefore, designing a more efficient non-linear transformation unit is a key to further improving rate-distortion performance of an image/video compression algorithm.

## SUMMARY

Embodiments of this application provide a non-linear processing method and apparatus for image compression, to expand a receptive field, and reduce a calculation amount, thereby further enhancing local attention, maintaining model performance, and effectively balancing computing power.

According to a first aspect, this application provides a non-linear processing method for image compression, including: obtaining a to-be-processed first image feature; and performing non-linear transformation processing on the first image feature to obtain a processed image feature, where the non-linear transformation processing sequentially includes first convolution processing, second convolution processing, and an element-wise multiplication operation.

In this embodiment of this application, non-linear transformation processing in image compression is changed, and convolution processing is performed for a plurality of times, so that a receptive field can be expanded, or a calculation amount is reduced when a receptive field remains unchanged, thereby further enhancing local attention, maintaining model performance, and effectively balancing computing power.

On an encoder side, the first image feature is obtained by the encoder side by performing conversion on a to-be-processed image from an image domain to a feature domain after obtaining the to-be-processed image. The conversion may include: (1) convolution processing in which feature extraction is performed by using a convolutional layer that has a local receptive field and a weight sharing mechanism (that is, each filter slides across an input feature); (2) performing feature extraction by using a multi-layer perceptron (Multilayer Perceptron, MLP) or a fully connected layer that has a global receptive field characteristic and does not share a weight; and (3) transformer (Transformer) processing, including matrix multiplication, MLP, and normalization processing, and having a global receptive field characteristic and strong ability to capture long-range dependency.

On a decoder side, the first image feature may be obtained by the decoder side in a manner corresponding to the encoder side, such as convolution processing, deconvolution processing, transposition convolution processing, interpolation+convolution processing, and transformer processing, after performing entropy decoding on a bitstream. The foregoing entropy decoding may be implemented by using an entropy decoding network in the foregoing embodiment. Details are not described herein.

The first image feature may be represented in a form of a two-dimensional matrix ($L \times C$, where L represents a length, and C represents a channel (channel)) or a three-dimensional matrix ($C \times H \times W$, where C represents a quantity of channels, H represents a height, and W represents a width). A specific form is related to the foregoing conversion manner. For example, the first image feature obtained through convolution processing or MLP extraction generally corresponds to a three-dimensional matrix, and the first image feature obtained through transformer processing generally corresponds to a two-dimensional matrix.

It should be noted that a manner of representing the first image feature is not specifically limited in embodiments of this application.

The to-be-processed image may be a picture, or may be an image frame in a video, or may be an image block obtained by segmenting the foregoing picture or image frame. This is not specifically limited.

In a possible implementation, a process of the non-linear transformation processing may include: performing the first convolution processing on the first image feature to obtain a second image feature; performing the second convolution processing on the second image feature to obtain a third image feature; and performing the element-wise multiplication operation on the first image feature and the third image feature to obtain the processed image feature.

In this embodiment of this application, the non-linear transformation processing includes the first convolution processing, the second convolution processing, and the element-wise multiplication operation.

The first convolution processing is first performed on the first image feature, to output the second image feature. The second image feature may be considered as a local response (a corrected value) of the first image feature, that is, the second image feature is a response signal obtained by performing the first convolution processing on the first image feature. Because a receptive field of the first convolution processing is limited, a response value of each location in the second image feature output through the first convolution processing is related only to an input feature value of a location adjacent to the location, and therefore is referred to as a local response. The first convolution processing may be represented by the following formula:

$$\mathrm{conv1}(x) = \beta 1 + \sum \gamma 1 \times x,$$

where

$\gamma 1$ represents a weight of a convolutional layer, and $\beta 1$ represents a bias parameter of the convolutional layer.

Then, the second convolution processing is performed on the second image feature, to output the third image feature. The third image feature may be considered as a local response (a corrected value) of the second image feature, that is, the third image feature is a response signal obtained by performing the second convolution processing on the second image feature. Because a receptive field of the second convolution processing is limited, a response value of each location in the third image feature output through the second convolution processing is related only to an input feature value of a location adjacent to the location, and therefore is referred to as a local response. The second convolution processing may be represented by the following formula:

$$\mathrm{conv2}(x) = \beta 2 + \sum \gamma 2 \times x,$$

where

$\gamma 2$ represents a weight of a convolutional layer, and $\beta 2$ represents a bias parameter of the convolutional layer.

The first convolution processing and the second convolution processing meet the following condition:

$$1 <= \mathrm{mid\_chs} <= \mathrm{chs},$$

where mid chs represents a quantity of output channels for the first convolution processing or a quantity of input channels for the second convolution processing; and chs represents a quantity of input channels for the first convolution processing or a quantity of output channels for the second convolution processing. It can be learned that a quantity of channels of the third image feature output through the second convolution processing is the same as a quantity of channels of the first image feature input for the first convolution processing.

Optionally, chs=mid_chs; or chs=2×mid_chs.

In this embodiment of this application, a configuration constraint of the quantity of channels may include: chs and mid_chs may be a multiple of 2 to the power of N. When chs=2×mid_chs, in terms of theoretical computing power, two convolutions are equivalent to a single convolution with both a quantity of input channels and a quantity of output channels being chs. In this case, balance between model performance and computing power constraints is optimal. For example, in a common encoding and decoding network model, chs may be a value like 256, 192, 128, 96, 64, 32, or 16.

Optionally, a convolution kernel size ks1_h*w for the first convolution processing and a convolution kernel size ks2_h*w for the second convolution may be the same or different.

In this embodiment of this application, the convolution kernel size may be configured based on an actual model performance requirement and an actual hardware computing power constraint. For example, the convolution kernel size may be set to symmetric 1×1, 3×3, or 5×5, or the convolution kernel size may be set to asymmetric 1×3, 3×1, 5×1, or 1×5. This is not specifically limited in embodiments of this application.

In this embodiment of this application, the receptive field can be expanded through two times of convolution processing, or the calculation amount is reduced when the receptive field remains unchanged, thereby further enhancing local attention. In addition, overall computing power can be effectively balanced by configuring kernel sizes and quantities of intermediate-layer channels of two convolutions. For example, both a convolution kernel for the first convolution processing and a convolution kernel for the second convolution processing are 3×3, and a 5×5 receptive field may be obtained through the two times of convolution processing. However, an input of the first convolution processing is eight channels, an output of the first convolution processing after processing may be four channels, an input of the second convolution processing is four channels, an output of the second convolution processing after processing may be eight channels, and a quantity of input/output channels remains unchanged. However, only four channels are processed in an intermediate calculation process, thereby reducing the calculation amount. However, if convolution processing is performed only once, a convolution kernel for the convolution processing needs to be 5×5 to prevent the receptive field from being changed. There are eight input/output channels, and a calculation amount is high.

The element-wise multiplication operation is performed on a plurality of corresponding feature values in the first image feature and the third image feature, that is, element-wise multiplication is performed on an input of the non-linear transformation processing and an output of the two times of convolution processing, which may be represented by the following formula:

$$c(i,j) = a(i,j) \times b(i,j),$$

where

(i, j) represents an index of a feature value in an image feature in which the feature value is located, a(i, j) represents a feature value in the first image feature, b(i, j) represents a feature value in the second image feature, and c(i, j) represents a feature value in the processed image feature.

Optionally, a size of a matrix corresponding to the third image feature is the same as a size of a matrix corresponding to the first image feature.

The third image feature whose size is the same as that of the first image feature may be obtained through the two times of convolution processing. This depends on an internal structure of the convolution processing, especially a length, a width, and a quantity of channels of a filter during the two times of convolution processing. If sizes of the third image feature and the first image feature are the same, correspondingly, an element in the matrix corresponding to the third image feature one-to-one corresponds to an element in the matrix corresponding to the first image feature. In this case, in the element-wise multiplication operation, element values at a same location are multiplied, to obtain a final element value at the location.

Optionally, a size of a matrix corresponding to the third image feature is different from a size of a matrix corresponding to the first image feature.

The third image feature whose size is different from that of the first image feature may also be obtained through the two times of convolution processing. This also depends on an internal structure of the convolution processing, especially a length, a width, and a quantity of channels of a filter during the two times of convolution processing. If sizes of the third image feature and the first image feature are different, correspondingly, an element in the matrix corresponding to the third image feature does not one-to-one correspond to an element in the matrix corresponding to the first image feature. In this case, in the element-wise multiplication operation, only element values at a same location are multiplied, to obtain a final element value at the location, and original values are retained for elements that do not correspond to each other and that are at a same location.

The process of the non-linear transformation processing in this embodiment may be represented by the following formula:

$$y = x * Conv_2\big(Conv_1(x)\big),$$

where

x represents the first image feature, $Conv_1(x)$ represents the second image feature, $Conv_2(Conv_1(x))$ represents the third image feature, and y represents the processed image feature.

In the foregoing formula, the element-wise multiplication operation is used, so that there is no need to require that convolution parameters y and β need to be positive numbers to adapt to the limitation that a positive number is required for calculating a square root, and there is also no need to constitute a value limitation on the convolution parameters y and β to adapt to the limitation that division requires that a denominator cannot be 0.

The non-linear transformation processing with an attention mechanism is implemented through the first convolution processing, the second convolution processing, and the element-wise multiplication operation. The attention mechanism means that some of all feature values in the first image feature are important and the other in all the feature values in the first image feature are the redundant, an output of convolution processing may be a weight of each feature value in an image feature, an original feature value may be rectified, an important feature value may be highlighted, and a redundant feature value may be suppressed. The element-wise multiplication operation is used to correct a value of each feature value in the first image feature based on the foregoing rectified information, thereby avoiding a limitation on a convolution parameter.

In a possible implementation, a process of the non-linear transformation processing may include: performing the first convolution processing on the first image feature to obtain a second image feature; performing the second convolution processing on the second image feature to obtain a third image feature; performing the element-wise multiplication operation on the first image feature and the third image feature to obtain a fourth image feature; and performing an element-wise addition operation on the first image feature and the fourth image feature to obtain the processed image feature.

In this embodiment of this application, the non-linear transformation processing includes the first convolution processing, the second convolution processing, the element-wise multiplication operation, and the element-wise addition operation.

After the fourth image feature is obtained, the element-wise addition operation is performed on a plurality of corresponding feature values in the first image feature and the fourth image feature, that is, element-wise addition is performed on an input of the non-linear transformation processing and an output of the element-wise multiplication operation, which may be represented by the following formula:

$$sum(i,j) = a(i,j) + c(i,j),$$

where

(i, j) represents an index of a feature value in an image feature in which the feature value is located, a(i, j) represents a feature value in the first image feature, c(i, j) represents a feature value in the fourth image feature, and sum(i, j) represents a feature value in the processed image feature.

The element-wise addition operation is a residual structure with first bit addition, so that an encoding and decoding network that uses the foregoing processing process can converge easily during training.

Optionally, a size of a matrix corresponding to the fourth image feature is the same as a size of a matrix corresponding to the first image feature.

Based on a same reason as the third image feature, a size of the fourth image feature may be the same as a size of the first image feature, and correspondingly, an element in the matrix corresponding to the fourth image feature one-to-one corresponds to an element in the matrix corresponding to the first image feature. In this case, in the element-wise addition operation, element values at a same location are added, to obtain a final element value at the location.

Optionally, a size of a matrix corresponding to the fourth image feature is different from a size of a matrix corresponding to the first image feature.

Based on a same reason as the third image feature, a size of the fourth image feature may be different from a size of the first image feature, and correspondingly, an element in the matrix corresponding to the fourth image feature does not one-to-one correspond to an element in the matrix corresponding to the first image feature. In this case, in the element-wise addition operation, only element values at a same location are added, to obtain a final element value at the location, and original values are retained for elements that do not correspond to each other and that are at a same location.

The process of the non-linear transformation processing in this embodiment may be represented by the following formula:

$$y = x + x * Conv_2\big(Conv_1(x)\big),$$

where

x represents the first image feature, $Conv_1(x)$ represents the second image feature, $Conv_2(Conv_1(x))$ represents the third image feature, $x * Conv_2(Conv_1(x))$ represents the fourth image feature, and y represents the processed image feature.

In a possible implementation, a process of the non-linear transformation processing may include: performing the first convolution processing on the first image feature to obtain a second image feature; performing first activation processing on the second image feature to obtain a fifth image feature; performing the second convolution processing on the fifth image feature to obtain a sixth image feature; and performing the element-wise multiplication operation on the first image feature and the sixth image feature to obtain the processed image feature.

In this embodiment of this application, the non-linear transformation processing includes the first convolution processing, the first activation processing, the second convolution processing, and the element-wise multiplication operation.

The first activation processing is a non-linear operation performed on each feature value in the second image feature obtained through the first convolution processing, and may include but is not limited to an absolute value operation, a rectified linear unit (Rectified Linear Unit, ReLU) processing series, Sigmoid, Tanh, an identity (Identity) operation, parametric rectified linear unit (Parametric Rectified Linear Unit, PReLU) processing, or the like.

It should be noted that another non-linear operation may alternatively be used in this application. This is not specifically limited in embodiments of this application.

The second image feature is converted into the fifth image feature through the first activation processing. The fifth image feature may also be represented in a form of a matrix like the first image feature. Because the first activation processing is performed on each feature value in the second image feature, each feature value in the second image feature has a corresponding feature value in the fifth image feature. Therefore, a size of a matrix corresponding to the fifth image feature is the same as that of a matrix corresponding to the second image feature, and feature values (values of matrix elements) at a same location correspond to each other. For example, if the second image feature is represented as a 3×3 matrix like the matrix A, the fifth image feature may also be represented as a 3×3 matrix. However, because the first activation processing is performed on the second image feature and the fifth image feature, feature values in the second image feature and the fifth image feature are not completely the same. Correspondingly, element values in matrices corresponding to the second image feature and the fifth image feature are also not completely the same.

The process of the non-linear transformation processing in this embodiment may be represented by the following formula:

$$y = x * Conv_2\big(\phi_1\big(Conv_1(x)\big)\big),$$

where

x represents the first image feature, $Conv_1(x)$ represents the second image feature, $\phi_1(Conv_1(x))$ represents the fifth image feature, $Conv_2(\phi_1(Conv_1(x)))$ represents the sixth image feature, and y represents the processed image feature.

In a possible implementation, a process of the non-linear transformation processing may include: performing the first convolution processing on the first image feature to obtain a second image feature; performing first activation processing on the second image feature to obtain a fifth image feature; performing the second convolution processing on the fifth image feature to obtain a sixth image feature; performing the element-wise multiplication operation on the first image feature and the sixth image feature to obtain a seventh image feature; and performing an element-wise addition operation on the first image feature and the seventh image feature to obtain the processed image feature.

In this embodiment of this application, the non-linear transformation processing includes the first convolution processing, the first activation processing, the second convolution processing, the element-wise multiplication operation, and the element-wise addition operation.

The process of the non-linear transformation processing in this embodiment may be represented by the following formula:

$$y = x + x * Conv_2\Big(\phi_1\big(Conv_1(x)\big)\Big),$$

where

x represents the first image feature, $Conv_1(x)$ represents the second image feature, $\phi_1(Conv_1(x))$ represents the fifth image feature, $Conv_2(\phi_1(Conv_1(x)))$ represents the sixth image feature, $x * Conv_2(\phi_1(Conv_1(x)))$ represents the seventh image feature, and y represents the processed image feature.

In a possible implementation, a process of the non-linear transformation processing may include: performing the first convolution processing on the first image feature to obtain a second image feature; performing first activation processing on the second image feature to obtain a fifth image feature; performing the second convolution processing on the fifth image feature to obtain a sixth image feature; performing second activation processing on the sixth image feature to obtain an eighth image feature; and performing the element-wise multiplication operation on the first image feature and the eighth image feature to obtain the processed image feature.

In this embodiment of this application, the non-linear transformation processing includes the first convolution processing, the first activation processing, the second convolution processing, the second activation processing, and the element-wise multiplication operation.

The process of the non-linear transformation processing in this embodiment may be represented by the following formula:

$$y = x * \phi_2\Big(Conv_2\big(\phi_1\big(Conv_1(x)\big)\big)\Big),$$

where

x represents the first image feature, $Conv_1(x)$ represents the second image feature, $\phi_1(Conv_1(x))$ represents the fifth image feature, $Conv_2(\phi_1(Conv_1(x)))$ represents the sixth image feature, $\phi_2(Conv_2(\phi_1(Conv_1(x))))$ represents the eighth image feature, and y represents the processed image feature.

In a possible implementation, a process of the non-linear transformation processing may include: performing the first convolution processing on the first image feature to obtain a second image feature; performing first activation processing on the second image feature to obtain a fifth image feature; performing the second convolution processing on the fifth image feature to obtain a sixth image feature; performing second activation processing on the sixth image feature to obtain an eighth image feature; performing the element-wise multiplication operation on the first image feature and the eighth image feature to obtain a ninth image feature; and performing an element-wise addition operation on the first image feature and the ninth image feature to obtain the processed image feature.

In this embodiment of this application, the non-linear transformation processing includes the first convolution processing, the first activation processing, the second convolution processing, the second activation processing, the element-wise multiplication operation, and the element-wise addition operation.

The process of the non-linear transformation processing in this embodiment may be represented by the following formula:

$$y = x + x * \phi_2\Big(Conv_2\big(\phi_1\big(Conv_1(x)\big)\big)\Big),$$

where

x represents the first image feature, $Conv_1(x)$ represents the second image feature, $\phi_1(Conv_1(x))$ represents the fifth image feature, $Conv_2(\phi_1(Conv_1(x)))$ represents the sixth image feature, $\phi_2(Conv_2(\phi_1(Conv_1(x))))$ represents the eighth image feature, $x * \phi_2(Conv_2(\phi_1(Conv_1(x))))$ represents the ninth image feature, and y represents the processed image feature.

In this embodiment of this application, channel-adaptive non-linear transformation processing is implemented by using an operation of combining two layers of convolution processing and activation processing.

It should be noted that the foregoing embodiments are merely used as several examples of the non-linear transformation processing, but do not constitute a limitation on a process of the non-linear transformation processing. In some possible implementations, the non-linear transformation processing may further include more activation processing and convolution processing. The process of the non-linear transformation processing is not specifically limited in embodiments of this application.

On the encoder side, encoding may be performed based on the processed image feature to obtain a bitstream.

After the processed image feature is obtained, the encoder side may continue to perform convolution processing on the processed image feature, or may perform non-linear transformation processing on an output of the convolution processing again after the convolution processing, and then perform entropy encoding on a result of the foregoing processing to obtain a bitstream. The entropy encoding may be implemented by using an entropy encoding network in the foregoing embodiment. Details are not described herein again. Alternatively, the result of the foregoing processing may be encoded in another encoding manner to obtain the bitstream. This is not limited in this application.

On the decoder side, a reconstructed image may be obtained based on the processed image feature.

After the processed image feature is obtained, the decoder side may also continue to perform convolution processing on the processed image feature, or may perform non-linear transformation processing on an output of the convolution processing again after the convolution processing, to convert the processed image feature from a feature domain to an image domain, to obtain the reconstructed image.

According to a second aspect, this application provides a non-linear processing apparatus for image compression, including: an obtaining module, configured to obtain a to-be-processed first image feature; and a transformation module, configured to perform non-linear transformation processing on the first image feature to obtain a processed image feature, where the non-linear transformation processing sequentially includes first convolution processing, second convolution processing, and an element-wise multiplication operation.

In a possible implementation, the non-linear transformation processing further includes an element-wise addition operation after the element-wise multiplication operation.

In a possible implementation, the non-linear transformation processing further includes first activation processing after the first convolution processing.

In a possible implementation, the non-linear transformation processing further includes second activation processing after the second convolution processing.

In a possible implementation, the first activation processing and the second activation processing each include an identity Identity operation, rectified linear unit ReLU processing, leaky rectified linear unit LeakyReLU processing, or parametric rectified linear unit PReLU processing.

In a possible implementation, the transformation module is specifically configured to: perform the first convolution processing on the first image feature to obtain a second image feature; perform the second convolution processing on the second image feature to obtain a third image feature; and perform the element-wise multiplication operation on the first image feature and the third image feature to obtain the processed image feature.

In a possible implementation, the transformation module is specifically configured to: perform the first convolution processing on the first image feature to obtain a second image feature; perform the second convolution processing on the second image feature to obtain a third image feature; perform the element-wise multiplication operation on the first image feature and the third image feature to obtain a fourth image feature; and perform the element-wise addition operation on the first image feature and the fourth image feature to obtain the processed image feature.

In a possible implementation, the first convolution processing and the second convolution processing meet the following condition:

$$1<=mid\_chs<=chs,$$

where
mid chs represents a quantity of output channels for the first convolution processing or a quantity of input channels for the second convolution processing; and chs represents a quantity of input channels for the first convolution processing or a quantity of output channels for the second convolution processing.

In a possible implementation, $chs=mid\_chs$; or $chs=2\times mid\_chs$.

In a possible implementation, a convolution kernel size for the first convolution processing is the same as or different from a convolution kernel size for the second convolution processing.

In a possible implementation, when the non-linear processing apparatus for image compression is used on an encoder side, the apparatus further includes an encoding module, configured to perform encoding based on the processed image feature to obtain a bitstream.

In a possible implementation, when the non-linear processing apparatus for image compression is applied on a decoder side, the apparatus further includes a reconstruction module, configured to obtain a reconstructed image based on the processed image feature.

According to a third aspect, an embodiment of this application provides an encoder, including: one or more processors; and a non-transitory computer-readable storage medium, coupled to the processor and storing a program for execution by the processor, where when the program is executed by the processor, the decoder is enabled to perform the method according to any one of the first aspect.

According to a fourth aspect, an embodiment of this application provides a decoder, including: one or more processors; and a non-transitory computer-readable storage medium, coupled to the processor and storing a program for execution by the processor, where when the program is executed by the processor, the decoder is enabled to perform the method according to any one of the first aspect.

According to a fifth aspect, an embodiment of this application provides a computer program product including program code. When the program code is executed on a computer or a processor, the method according to any one of the first aspect is performed.

According to a sixth aspect, an embodiment of this application provides a computer-readable storage medium, including instructions. When the instructions are run on a computer, the computer is enabled to perform the method according to any one of the first aspect.

**BRIEF DESCRIPTION OF DRAWINGS**

FIG. 1 is an example diagram of a typical deep learning image compression framework;

FIG. 2 is an example diagram of a typical deep learning video compression framework;

FIG. 3 is an example diagram of an image/video storage/transmission application scenario;

FIG. 4 is an example diagram of an image/video storage application scenario;

FIG. 5 is an example diagram of a Huawei Cloud application scenario;

FIG. 6 is a flowchart of a process 600 of a non-linear processing method for image compression according to an embodiment of this application;

FIG. 7a is a diagram of a process of non-linear transformation processing with an attention mechanism;

FIG. 7b is a diagram of a process of residual non-linear transformation processing with an attention mechanism;

FIG. 7c is a diagram of a process of non-linear transformation processing with an attention mechanism;

FIG. 7d is a diagram of a process of residual non-linear transformation processing with an attention mechanism;

FIG. 7e is a diagram of a process of non-linear transformation processing with an attention mechanism;

FIG. 7f is a diagram of a process of residual non-linear transformation processing with an attention mechanism;

FIG. 8 is a diagram of residual non-linear transformation processing with an attention mechanism;

FIG. 9 is a diagram of non-linear transformation processing with an attention mechanism;

FIG. 10 is a diagram of non-linear transformation processing with an attention mechanism;

FIG. 11 is an example diagram of a structure of an encoding apparatus 1100 according to an embodiment of this application; and

FIG. 12 is an example diagram of a structure of a decoding apparatus 1200 according to an embodiment of this application.

**DESCRIPTION OF EMBODIMENTS**

To make objectives, technical solutions, and advantages of this application clearer, the following clearly and completely describes the technical solutions in this application with reference to the accompanying drawings in this application. It is clear that the described embodiments are merely a part rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, terms such as "first" and "second" are merely intended for distinguishing and description, and shall not be understood as indicating or implying relative importance, or indicating or implying a sequence. In addition, terms "include", "have", and any variant thereof are intended to cover non-exclusive inclusion, for example, include a series of steps or units. A method, system, product, or device is not necessarily limited to those steps or units expressly listed, but may include another step or unit not expressly listed or inherent to such a process, method, product, or device.

It should be understood that, in this application, "at least one" refers to one or more, and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally represents an "or" relationship between associated objects. "At least one of the following items (pieces)" or a similar expression thereof indicates any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

Terms in embodiments of this application are described as follows.

1. Bit rate: The bit rate is an average encoding length required for encoding a unit pixel in image compression.

2. Rate-distortion performance: The rate-distortion performance is an indicator used to measure performance of a compression algorithm. Both a bit rate and distortion of a decoded image are considered.

3. Attention mechanism: The attention mechanism is a means of screening high-value information from a large amount of information by using limited attention resources. The attention mechanism enables a neural network pay more attention to related parts in an input and less attention to unrelated parts.

4. Residual structure: The residual structure is a common connection structure in a neural network, and a calculation manner may be represented as H(x)=x+f(x). This structure can prevent gradient disappearance and gradient explosion problems that may occur when a network depth increases.

5. Non-linear transformation unit: The non-linear transformation unit is a network unit including a non-linear operation (for example, an operation such as ReLU, Sigmoid, or Tanh), and an overall calculation manner of the unit does not conform to a linear characteristic.

Because embodiments of this application relate to application of a neural network, for ease of understanding, the following first explains and describes related nouns or terms used in embodiments of this application.

1. Neural network

A neural network (neural network, NN) is a machine learning model. The neural network may include neurons. The neuron may be an operation unit that uses xs and an intercept of 1 as inputs, where an output of the operation unit may be as follows:

$$h_{W,b}(x) = f(W^T x) = f(\sum_{s=1}^{n} W_s x_s + b)$$

(1-1), where
s=1, 2, ..., or n, n is a natural number greater than 1, Ws is a weight of xs, and b is a bias of the neuron, and f is an activation function (activation functions) of the neuron, and is used to introduce a non-linear characteristic into the neural network to convert an input signal in the neuron into an output signal. An output signal of the activation function may serve as an input of a next convolutional layer. The activation function may be a non-linear function like ReLU. The neural network is a network formed by linking many single neurons together. To be specific, an output of a neuron may be an input of another neuron. An input of each neuron may be connected to a local receptive field (local receptive field) of a previous layer to extract a feature of the local receptive field. The local receptive field may be a region including several neurons.

2. Multi-layer perceptron (multi-layer perception, MLP)

An MLP is a simple deep neural network (deep neural network, DNN) (different layers are fully connected), and is also referred to as a multi-layer neural network. The MLP may be understood as a neural network with many hidden layers. There is no special measurement criterion for "many" herein. The DNN is divided based on locations of different layers, and a neural network in the DNN may be divided into three types: an input layer, a hidden layer, and an output layer. Generally, a first layer is an input layer, a last layer is an output layer, and intermediate layers are all hidden layers. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the work at each layer is as the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained by performing such a simple operation on the input vector $\vec{x}$. Because the DNN has a large quantity of layers, there are a large quantity of coefficients W and offset vectors $\vec{b}$. Definitions of these parameters in the DNN are as follows: The coefficient W is used as an example. It is assumed that in a DNN having three layers, a linear coefficient from a $4^{th}$ neuron at a second layer to a $2^{nd}$ neuron at a third layer is defined as $w_{24}^{3}$. The superscript 3 represents a layer at which the coefficient W is located, and the subscript corresponds to an output third-layer index 2 and an input second-layer index 4. In conclusion, a coefficient from a $k^{th}$ neuron at an $(L-1)^{th}$ layer to a $j^{th}$ neuron at an $L^{th}$ layer is defined as $W_{jk}^{L}$. It should be noted that there is no parameter W for the input layer. In the deep neural network, more hidden layers enable the network to be more capable of describing a complex case in the real world. Theoretically, a model with more parameters has a higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W of many layers).

3. Convolutional neural network

The convolutional neural network (convolutional neuron network, CNN) is a deep neural network with a convolutional structure, and is a deep learning (deep learning) architecture. In the deep learning architecture, multilayer learning is performed at different abstract levels according to a machine learning algorithm. As a deep learning architecture, the CNN is a feed-forward (feed-forward) artificial neural network, and each neuron in the feed-forward artificial neural network may respond to an image input to the feed-forward artificial neural network. The convolutional neural network includes a feature extractor constituted by a convolutional layer and a pooling layer. The feature extractor may be considered as a filter. A convolution process may be considered as using a trainable filter to perform convolution on an input image or a convolutional feature plane (feature map).

The convolutional layer is a neuron layer that is in the convolutional neural network and at which convolution processing is performed on an input signal. The convolutional layer may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix is usually used to process pixels at a granularity level of one pixel (or two pixels, depending on a value of a stride (stride)) in a horizontal direction on the input image, to extract a specific feature from the image. A size of the weight matrix needs to be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. Sizes (rows×columns) of the plurality of weight matrices are the same. Sizes of feature maps extracted by the plurality of weight matrices with the same size are also the same, and then the plurality of extracted feature maps with the same size are combined to form an output of the convolution operation. Weight values in these weight matrices need to be obtained through a large amount of training during actual application. Each weight matrix including weight values obtained through training may be used to extract information from an input image, so that the convolutional neural network performs correct prediction. When the convolutional neural network has a plurality of convolutional layers, a large quantity of general features are usually extracted at an initial convolutional layer. The general feature may also be referred to as a low-level feature. As a depth of the convolutional neural network increases, a feature extracted at a subsequent convolutional layer is more complex, for example, a high-level semantic feature. A feature with higher-level semantics is more applicable to a to-be-resolved problem.

A quantity of training parameters often needs to be reduced. Therefore, a pooling layer often needs to be periodically introduced after a convolutional layer. One convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a small size. The average pooling operator may be used to perform calculation on pixel values in the image within a specific range, to generate an average value, and the average value is used as an average pooling result. The maximum pooling operator may be used to select a pixel with a maximum value within a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

After processing performed at the convolutional layer/pooling layer, the convolutional neural network is not ready to output required output information, because as described above, at the convolutional layer/pooling layer, only a feature is extracted, and parameters resulting from the input image are reduced. However, to generate final output information (required class information or other related information), the convolutional neural network needs to use the neural network layer to generate an output of a quantity of one or a group of required classes. Therefore, the neural network layer may include a plurality of hidden layers. Parameters included in the plurality of hidden layers may be obtained through pre-training based on related training data of a specific task type. For example, the task type may include image recognition, image classification, and super-resolution image reconstruction.

Optionally, at the neural network layer, the plurality of hidden layers are followed by the output layer of the entire convolutional neural network. The output layer has a loss function similar to a categorical cross entropy, and the loss function is specifically used to calculate a prediction error. Once forward propagation of the entire convolutional neural network is completed, back propagation is started to update a weight value and a deviation of each layer mentioned above, to reduce a loss of the convolutional neural network and an error between a result output by the convolutional neural network by using the output layer and an ideal result.

4. Recurrent neural network

The recurrent neural network (recurrent neural networks, RNN) is used to process sequence data. In a conventional neural network model, layers from an input layer to a hidden layer and then to an output layer are fully connected, but nodes at each layer are not connected. Such a common neural network resolves many problems, but is still incapable of resolving many other problems. For example, to predict a next word in a sentence, a previous word usually needs to be used, because the previous word and the next word in the sentence are not independent of each other. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are no longer disconnected but are connected, and an input of the hidden layer not only includes an output of the input layer, but also includes an output of the hidden layer at a previous moment. Theoretically, the RNN can process sequence data of any length. Training for the RNN is the same as training for a conventional CNN or DNN. An error back propagation algorithm is also used, but a difference between the RNN and the example conventional neural network is as follows: If the RNN is expanded, a parameter such as W of the RNN is shared. In addition, during use of a gradient descent algorithm, an output in each step depends not only on a network in a current step, but also on a network status in several previous steps. The learning algorithm is referred to as a back propagation through time (back propagation through time, BPTT) algorithm.

Why is the recurrent neural network still required when the convolutional neural network is available? A reason is simple. In the convolutional neural network, there is a premise that elements are independent of each other, and an input and an output, for example, a cat and a dog are also independent of each other. However, in the real world, many elements are interconnected. For example, stocks change over time. For another example, a person says: "I love traveling, and my favorite place is Yunnan. I will go there when I have a chance." In this case, if filling in a blank needs to be completed, people should know that "Yunnan" is filled in. This is because people perform inference from a context. However, how do machines do that? In this case, the RNN emerges correspondingly. The RNN is intended to make the machine capable of memorizing like humans. Therefore, an output of the RNN needs to depend on current input information and historical memorized information.

5. Loss function

In a process of training a deep neural network, it is expected that an output of the deep neural network is as close as possible to a predicted value that is actually expected. Therefore, a predicted value of a current network and a target value that is actually expected may be compared, and then a weight vector of each layer of the neural network is updated based on a difference between the predicted value and the target value (certainly, there is usually an initialization process before first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A higher output value (loss) of the loss function indicates a larger difference. Therefore, training for the deep neural network is a process of minimizing the loss as much as possible.

6. Back propagation algorithm

A convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to converge the error loss. The back propagation algorithm is an error-loss-centered back propagation motion intended to obtain an optimal parameter, for example, a weight matrix, of the super-resolution model.

7. Generative adversarial network

The generative adversarial network (generative adversarial networks, GAN) is a deep learning model. The model includes at least two modules: one module is a generative model (Generative Model), and the other module is a discriminative model (Discriminative Model). The two modules learn from each other through gaming, to generate a better output. Both the generative model and the discriminative model may be neural networks, and may specifically be deep neural networks or convolutional neural networks. A basic principle of the GAN is as follows: A GAN for generating a picture is used as an example. It is assumed that there are two networks: G (Generator) and D (Discriminator). G is a network for generating a picture. G receives random noise z, and generates the picture based on the noise, where the picture is denoted as G(z). D is a discriminator network used to determine whether a picture is "real". An input parameter of D is x, x represents a picture, and an output D(x) represents a probability that x is a real picture. If a value of D(x) is 1, it represents that the picture is 130% real. If a value of D(x) is 0, it represents that the picture cannot be real. In a process of training the generative adversarial network, an objective of the generative network G is to generate a picture that is as real as possible to deceive the discriminative network D, and an objective of the discriminative network D is to distinguish between the picture generated by G and a real picture as much as possible. In this way, a dynamic "gaming" process, to be specific, "adversary" in the "generative adversarial network", exists between G and D. A final gaming result is that, in an ideal state, G may generate a picture G(z) that is "to be difficultly distinguished from a real picture", and it is difficult for D to determine whether the picture generated by G is real, to be specific, D(G(z))=0.5. In this way, an excellent generative model G is obtained, and can be used to generate a picture.

As a convolutional neural network (convolution neural network, CNN) outperforms a conventional algorithm in computer vision tasks such as image recognition and target detection, more researchers start to explore deep learning-based image/video compression methods. Some researchers design an end-to-end deep learning image/video compression algorithm. For example, modules such as an encoding network, an entropy estimation network, an entropy encoding network, an entropy decoding network, and a decoding network are optimized as a whole. The encoding network and the decoding network may also be referred to as a transformation module and an inverse transformation module, and generally include a convolutional layer and a non-linear transformation unit.

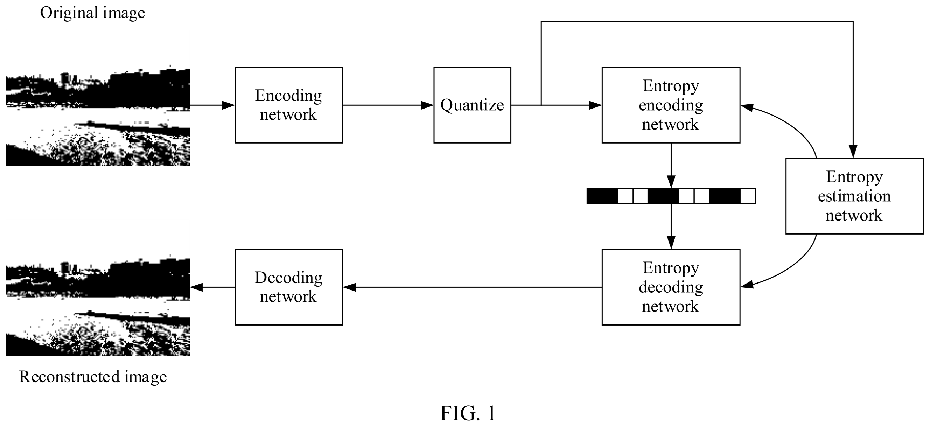

FIG. 1 is an example diagram of a typical deep learning image compression framework. As shown in FIG. 1, the image compression framework is an implementation solution of a current artificial intelligence (Artificial Intelligence, AI) image compression technology.

On an encoder side, an original image is transformed from an image domain to a feature domain after being processed by an encoding network, and a transformed image feature is encoded into a to-be-transmitted or to-be-stored bitstream after being processed by a quantization module and an entropy encoding network. On a decoder side, a bitstream is decoded into an image feature after being processed by an entropy decoding network, and the image feature is transformed from the feature domain to the image domain after being processed by a decoding network, to obtain a reconstructed image. An entropy estimation network obtains an estimated probability value of each feature element through estimation based on the image feature, to be used for processing by the entropy encoding network and the entropy decoding network.

In this embodiment, both the encoding network (Encoder) and the decoding network (Decoder) have a non-linear transformation unit.

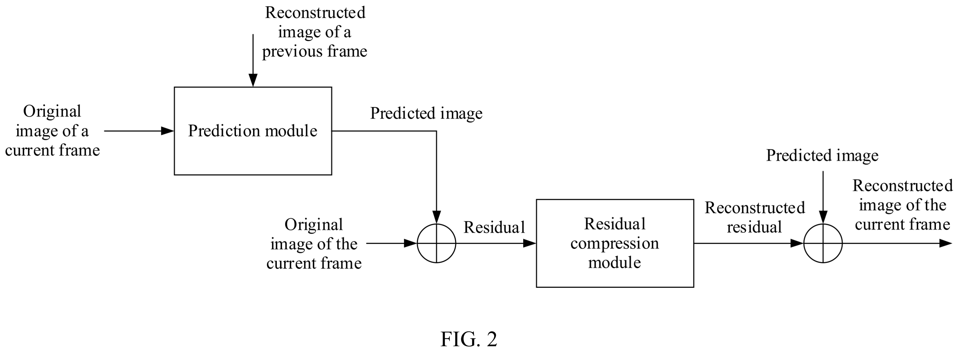

FIG. 2 is an example diagram of a typical deep learning video compression framework. As shown in FIG. 2, the video compression framework includes a prediction module (predict model) and a residual compression (residual compress) module.

The prediction module predicts a current frame by using a reconstructed image of a previous frame to obtain a predicted image. The residual compression module compresses a residual between an original image and a predicted image of the current frame. In addition, the residual compression module decompresses the residual to obtain a reconstructed residual, and sums up the reconstructed residual and the predicted image to obtain a reconstructed image of the current frame. Both an encoding sub-network and a decoding sub-network in the prediction module and the residual compression module have a non-linear transformation unit.

In this embodiment, both the prediction module (predict model) and the residual compression (residual compress) module have the non-linear transformation unit.

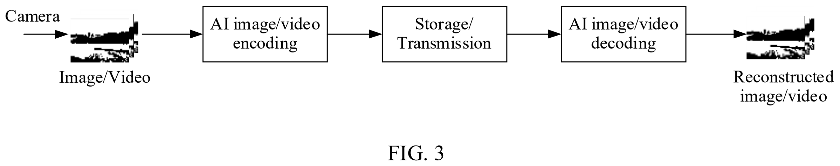

FIG. 3 is an example diagram of an image/video storage/transmission application scenario. As shown in FIG. 3, the application scenario may be a service related to image/video capturing, storage, or transmission in a terminal, Huawei Cloud, or video surveillance, for example, photographing/video recording and an album of a terminal, an album of Huawei Cloud, or video surveillance.

Encoder side: A camera (Camera) captures an image/video. An AI image/video encoding network performs feature extraction on the image/video to obtain an image feature with low redundancy, and then performs compression based on the image feature to obtain a bitstream/image file.

Decoder side: When a reconstructed image/video needs to be output, an AI image/video decoding network decompresses the bitstream/image file to obtain an image feature, and then performs reverse feature extraction on the image feature to obtain the reconstructed image/video.

A storage/transmission module stores (for example, photographing by a terminal, video surveillance, or a cloud server) or transmits (for example, a cloud service or a live broadcast technology) the bitstream/image file obtained through compression for different services.

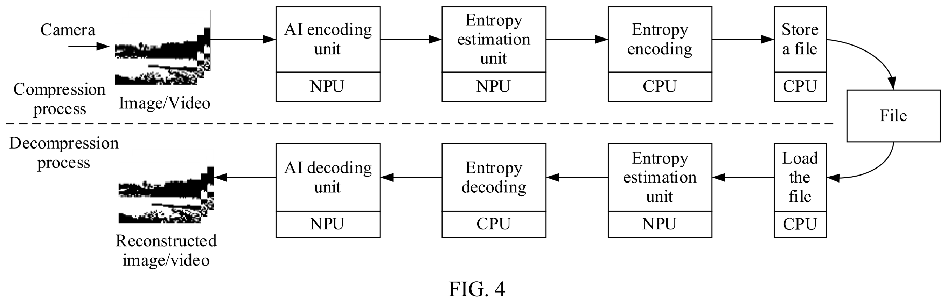

FIG. 4 is an example diagram of an image/video storage application scenario. As shown in FIG. 4, the application scenario may be an album of a terminal, Cyberverse (a brand-new "digital reality" technology based on virtual-reality integration released by Huawei), an album of Huawei Cloud, video surveillance, live broadcast, or the like.

Encoder side: A camera captures a digital image/video. An AI encoding unit transforms the image/video into an image feature with lower redundancy. The AI encoding unit usually includes a non-linear transformation unit, and has a non-linear characteristic. An entropy estimation unit is responsible for calculating an encoding probability of each piece of data in the image feature. An entropy encoding network performs lossless encoding on the image feature based on the probability corresponding to each piece of data to obtain a bitstream/image file. This further reduces a data transmission amount in an image compression process. A storage module stores the bitstream/image file in a corresponding storage location of the terminal.

Decoder side: A loading module loads the bitstream/image file from the corresponding storage location of the terminal, and inputs the bitstream/image file to an entropy decoding network. An entropy estimation unit is responsible for calculating a decoding probability of each piece of data in the image feature. The entropy decoding network performs lossless decoding on the bitstream/image file based on the probability corresponding to each piece of data to obtain a reconstructed image feature. An AI decoding unit performs inverse transformation on the image feature output through entropy decoding, and parses the image feature into a reconstructed image/video. Corresponding to the AI encoding unit, the AI decoding unit usually includes a non-linear transformation unit, and has a non-linear characteristic.

Optionally, the AI encoding unit, the AI decoding unit, and the entropy estimation unit may be a network processing unit (Network Processing Unit, NPU), and the entropy encoding network, the entropy decoding network, the storage module, and the loading module may be a central processing unit (Central Processing Unit, CPU).

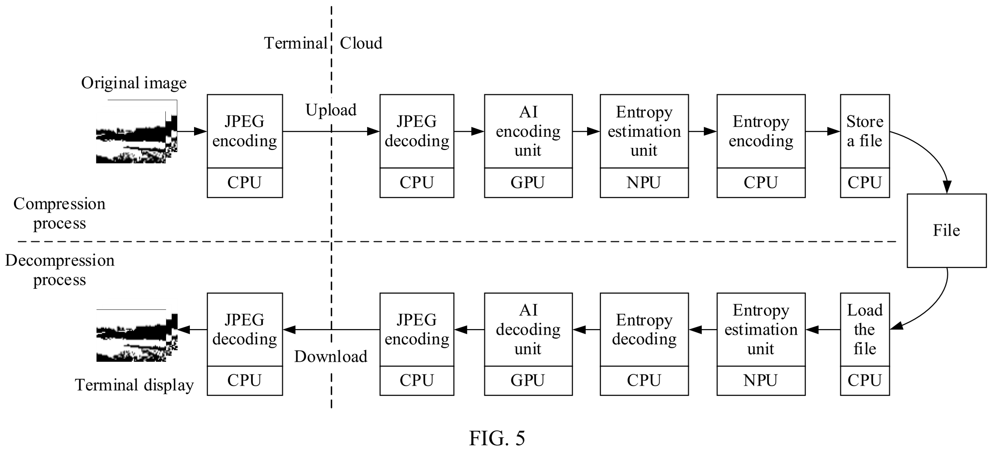

FIG. 5 is an example diagram of a Huawei Cloud application scenario. As shown in FIG. 5, the application scenario may be an album of a terminal, Cyberverse, an album of Huawei Cloud, video surveillance, live broadcast, or the like.

Encoder side: The local obtains an original image, performs image (JPEG) encoding on the original image to obtain a compressed image, and then sends the compressed image to the cloud. The cloud performs JPEG decoding on the compressed image to obtain an image. Then, an AI encoding unit transforms the image into an image feature with lower redundancy. The AI encoding unit usually includes a non-linear transformation unit, and has a non-linear characteristic. An entropy estimation unit is responsible for calculating an encoding probability of each piece of data in the image feature. An entropy encoding network performs lossless encoding on the image feature based on a probability corresponding to each piece of data to obtain a bitstream/image file.

This further reduces a data transmission amount in an image compression process. A storage module stores the bitstream/image file in a corresponding storage location of the terminal.

Decoder side: When the local needs to obtain the image from the cloud, a loading module of the cloud loads the bitstream/image file from the corresponding storage location of the terminal, and inputs the bitstream/image file to an entropy decoding network. An entropy estimation unit is responsible for calculating a decoding probability of each piece of data in the image feature. The entropy decoding network performs lossless decoding on the bitstream/image file based on a probability corresponding to each piece of data to obtain a reconstructed image feature. An AI decoding unit performs inverse transformation on the image feature output through entropy decoding, and parses the image feature into a reconstructed image. Corresponding to the AI encoding unit, the AI decoding unit usually includes a non-linear transformation unit, and has a non-linear characteristic. Then, the cloud performs JPEG encoding on the image to obtain a compressed image, and sends the compressed image to the local. The local performs JPEG decoding on the compressed image to obtain and display the image.

Optionally, the entropy estimation unit may be an NPU, the JPEG encoding module, the JPEG decoding module, the entropy encoding network, the entropy decoding network, the storage module, and the loading module may be a CPU, and the AI encoding unit and the AI decoding unit may be a graphics processing unit (Graphics Processing Unit, GPU).

In view of the foregoing application scenarios, an embodiment of this application provides a non-linear processing method for image compression, to implement efficient non-linear transformation processing and improve rate-distortion performance in an image/video compression algorithm.

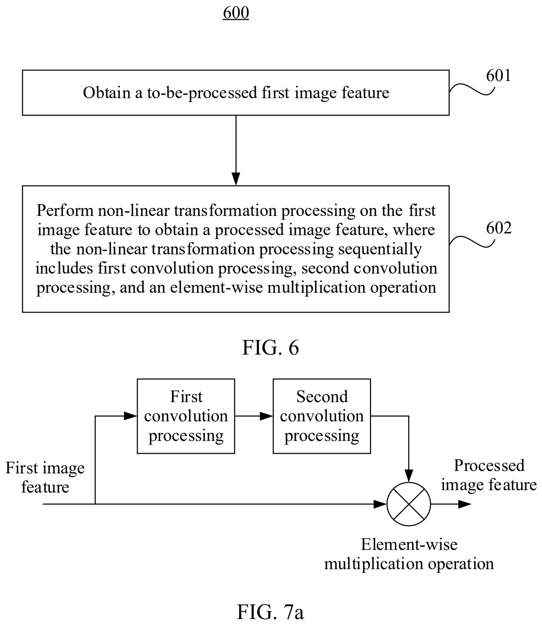

FIG. 6 is a flowchart of a process 600 of a non-linear processing method for image compression according to an embodiment of this application. The process 600 may be performed by the encoder side or the decoder side in the foregoing embodiments. The process 600 is described as a series of steps or operations. It should be understood that the process 600 may be performed in various sequences and/or simultaneously, and is not limited to an execution sequence shown in FIG. 6. The process 600 includes the following steps.

Step 601: Obtain a to-be-processed first image feature.

On an encoder side, the first image feature is obtained by the encoder side by performing conversion on a to-be-processed image from an image domain to a feature domain after obtaining the to-be-processed image. The conversion may include: (1) convolution processing, using a convolutional layer for feature extraction and having a local receptive field and a weight sharing mechanism (that is, each filter slides across an input feature); (2) a multilayer perceptron (Multilayer Perceptron, MLP) or a fully connected layer is used to extract a feature, which has a global receptive field characteristic and does not share a weight; and (3) transformer (Transformer) processing, including matrix multiplication, MLP, and normalization processing, and having a global receptive field characteristic and strong ability to capture long-range dependency.

On a decoder side, the first image feature may be obtained by the decoder side in a manner corresponding to the encoder side, such as convolution processing, deconvolution processing, transposition convolution processing, interpolation+convolution processing, and transformer processing, after performing entropy decoding on a bitstream. The foregoing entropy decoding may be implemented by using the entropy decoding network in the foregoing embodiments. Details are not described herein again.

The first image feature may be represented in a form of a two-dimensional matrix (L×C, where L represents a length, and C represents a channel (channel)) or a three-dimensional matrix (C×H×W, where C represents a quantity of channels, H represents a height, and W represents a width). A specific form is related to the foregoing conversion manner. For example, the first image feature obtained through convolution processing or MLP extraction generally corresponds to a three-dimensional matrix, and the first image feature obtained through transformer processing generally corresponds to a two-dimensional matrix.

For example, the first image feature is represented as a two-dimensional matrix:

$$A = \begin{bmatrix} a_{0,2} & a_{1,2} & a_{2,2} \\ a_{0,1} & a_{1,1} & a_{2,1} \\ a_{0,0} & a_{1,0} & a_{2,0} \end{bmatrix}$$

The two-dimensional matrix A is a 3×3 matrix and includes nine elements. Each element a(i, j) corresponds to one feature value in the first image feature, where i represents a length corresponding to the element a(i, j), and j represents a channel in which the element a(i, j) is located.

For another example, the first image feature is represented as a three-dimensional matrix:

$$B = \begin{bmatrix} \begin{bmatrix} b_{0,2,0} & b_{1,2,0} & b_{2,2,0} \\ b_{0,1,0} & b_{1,1,0} & a_{2,1,0} \\ b_{0,0,0} & b_{1,0,0} & a_{2,0,0} \end{bmatrix}, \begin{bmatrix} b_{0,2,1} & b_{1,2,1} & b_{2,2,1} \\ b_{0,1,1} & b_{1,1,1} & b_{2,1,1} \\ b_{0,0,1} & b_{1,0,1} & b_{2,0,1} \end{bmatrix} \end{bmatrix}$$

The three-dimensional matrix B is a 3×3×2 matrix and includes 18 elements. Each element a(i, j, l) corresponds to a feature value in the first image feature, where i represents a row in which the element a(i, j, l) is located, j represents a column in which the element a(i, j, l) is located, and l represents a channel in which the element a(i, j, l) is located.

It should be noted that a manner of representing the first image feature is not specifically limited in embodiments of this application.

The to-be-processed image may be a picture, or may be an image frame in a video, or may be an image block obtained by segmenting the foregoing picture or image frame. This is not specifically limited.

Step 602: Perform non-linear transformation processing on the first image feature to obtain a processed image feature, where the non-linear transformation processing sequentially includes first convolution processing, second convolution processing, and an element-wise multiplication operation.

In a possible implementation, a process of the non-linear transformation processing may include: performing the first convolution processing on the first image feature to obtain a second image feature; performing the second convolution processing on the second image feature to obtain a third image feature; and performing the element-wise multiplication operation on the first image feature and the third image feature to obtain the processed image feature.

FIG. 7a is a diagram of a process of non-linear transformation processing with an attention mechanism. As shown in FIG. 7a, in this embodiment of this application, the non-linear transformation processing includes the first convolution processing, the second convolution processing, and the element-wise multiplication operation.

The first convolution processing is first performed on the first image feature, to output the second image feature. The second image feature may be considered as a local response (a corrected value) of the first image feature, that is, the second image feature is a response signal obtained by performing the first convolution processing on the first image feature. Because a receptive field of the first convolution processing is limited, a response value of each location in the second image feature output through the first convolution processing is related only to an input feature value of a location adjacent to the location, and therefore is referred to as a local response. The first convolution processing may be represented by the following formula:

$$\text{conv1}(x) = \beta 1 + \sum \gamma 1 \times x,$$

where $\gamma 1$ represents a weight of a convolutional layer, and $\beta 1$ represents an offset parameter of the convolutional layer.

Then, the second convolution processing is performed on the second image feature, to output the third image feature. The third image feature may be considered as a local response (a corrected value) of the second image feature, that is, the third image feature is a response signal obtained by performing the second convolution processing on the second image feature. Because a receptive field of the second convolution processing is limited, a response value of each location in the third image feature output through the second convolution processing is related only to an input feature value of a location adjacent to the location, and therefore is referred to as a local response. The second convolution processing may be represented by the following formula:

$$\mathrm{conv2}(x) = \beta 2 + \sum \gamma 2 \times x,$$

where $\gamma 2$ represents a weight of a convolutional layer, and $\beta 2$ represents an offset parameter of the convolutional layer.

The first convolution processing and the second convolution processing meet the following condition:

$$1 <= \mathrm{mid\_chs} <= \mathrm{chs}, \mathrm{where}$$

where mid_chs represents a quantity of output channels for the first convolution processing or a quantity of input channels for the second convolution processing; and chs represents a quantity of input channels for the first convolution processing or a quantity of output channels for the second convolution processing. It can be learned that a quantity of channels of the third image feature output from the second convolution processing is the same as a quantity of channels of the first image feature input for the first convolution processing.

Optionally, chs=mid_chs; or chs=2×mid_chs.

In this embodiment of this application, a configuration constraint of the quantity of channels may include: chs and mid_chs may be a multiple of 2 to the power of N. When chs=2×mid_chs, in terms of theoretical computing power, two convolutions are equivalent to a single convolution with both a quantity of input channels and a quantity of output channels being chs. In this case, balance between model performance and computing power constraints is optimal. For example, in a common encoding and decoding network model, chs may be a value like 256, 192, 128, 96, 64, 32, or 16.

Optionally, a convolution kernel size ks1_h*w of the first convolution processing and a convolution kernel size ks2_h*w of the second convolution may be the same or different.

In this embodiment of this application, the convolution kernel size may be configured based on an actual model performance requirement and an actual hardware computing power constraint. For example, the convolution kernel size may be set to symmetric 1×1, 3×3, or 5×5, or the convolution kernel size may be set to asymmetric 1×3, 3×1, 5×1, or 1×5. This is not specifically limited in embodiments of this application.

In this embodiment of this application, the receptive field can be expanded through two times of convolution processing, or the calculation amount is reduced when the receptive field remains unchanged, thereby further enhancing local attention. In addition, overall computing power can be effectively balanced by configuring kernel sizes and quantities of intermediate-layer channels of two convolutions. For example, both a convolution kernel of the first convolution processing and a convolution kernel of the second convolution processing are 3×3, and a 5×5 receptive field may be obtained through the two times of convolution processing. However, an input of the first convolution processing is eight channels, an output of the first convolution processing after processing may be four channels, an input of the second convolution processing is four channels, an output of the second convolution processing after processing may be eight channels, and a quantity of input/output channels remains unchanged. However, only four channels are processed in an intermediate calculation process, thereby reducing the calculation amount. However, if convolution processing is performed only once, a convolution kernel for the convolution processing needs to be 5×5 to prevent the receptive field from being changed. There are eight input/output channels, and a calculation amount is high.

The element-wise multiplication operation is performed on a plurality of corresponding feature values in the first image feature and the third image feature, that is, element-wise multiplication is performed on an input of the non-linear transformation processing and an output of the two times of convolution processing, which may be represented by the following formula:

$$c(i, j) = a(i, j) \times b(i, j),$$

where

(i, j) represents an index of a feature value in an image feature in which the feature value is located, a(i, j) represents a feature value in the first image feature, b(i, j) represents a feature value in the second image feature, and c(i, j) represents a feature value in the processed image feature.

Optionally, a size of a matrix corresponding to the third image feature is the same as a size of a matrix corresponding to the first image feature.

The third image feature whose size is the same as that of the first image feature may be obtained through the two times of convolution processing. This depends on an internal structure of the convolution processing, especially a length, a width, and a quantity of channels of a filter during the two times of convolution processing. If sizes of the third image feature and the first image feature are the same, correspondingly, an element in the matrix corresponding to the third image feature one-to-one corresponds to an element in the matrix corresponding to the first image feature. In this case, in the element-wise multiplication operation, element values at a same location are multiplied, to obtain a final element value at the location.

Optionally, a size of a matrix corresponding to the third image feature is different from a size of a matrix corresponding to the first image feature.

The third image feature whose size is different from that of the first image feature may also be obtained through the two times of convolution processing. This also depends on an internal structure of the convolution processing, especially a length, a width, and a quantity of channels of a filter during the two times of convolution processing. If sizes of the third image feature and the first image feature are different, correspondingly, an element in the matrix corresponding to the third image feature does not one-to-one correspond to an element in the matrix corresponding to the first image feature. In this case, in the element-wise multiplication operation, only element values at a same location are multiplied, to obtain a final element value at the location, and original values are retained for elements that do not correspond to each other and that are at a same location.

The process of the non-linear transformation processing in this embodiment may be represented by the following formula:

$$y = x * Conv_2\big(Conv_1(x)\big),$$

where

x represents the first image feature, $Conv_1(x)$ represents the second image feature, $Conv_2(Conv_1(x))$ represents the third image feature, and y represents the processed image feature.

In the foregoing formula, the element-wise multiplication operation is used, so that there is no need to require that convolution parameters y and β need to be positive numbers to adapt to the limitation that a positive number is required for calculating a square root, and there is also no need to constitute a value limitation on the convolution parameters y and β to adapt to the limitation that division requires that a denominator cannot be 0.

The non-linear transformation processing with the attention mechanism is implemented through the first convolution processing, the second convolution processing, and the element-wise multiplication operation. The attention mechanism means that all feature values in the first image feature are either important or redundant, an output of convolution processing may be a weight of each feature value in an image feature, an original feature value may be rectified, an important feature value may be highlighted, and a redundant feature value may be suppressed. The element-wise multiplication operation corrects a value of each feature value in the first image feature based on the foregoing rectified information, thereby avoiding a limitation on a convolution parameter.

In a possible implementation, a process of the non-linear transformation processing may include: performing the first convolution processing on the first image feature to obtain a second image feature; performing the second convolution processing on the second image feature to obtain a third image feature; performing the element-wise multiplication operation on the first image feature and the third image feature to obtain a fourth image feature; and performing an element-wise addition operation on the first image feature and the fourth image feature to obtain the processed image feature.

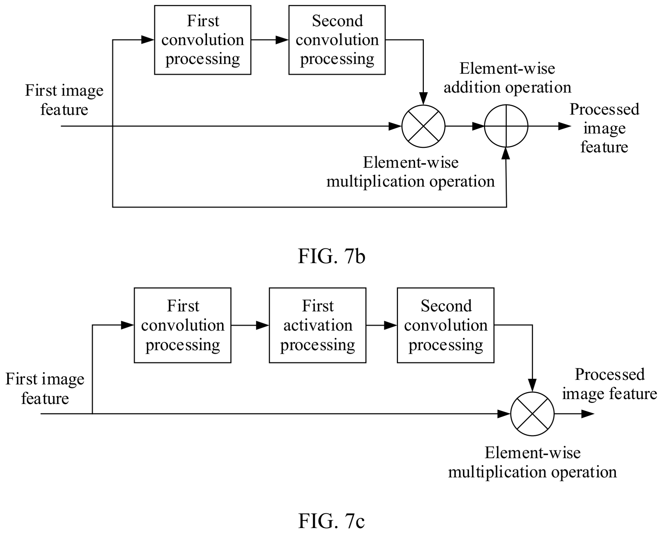

FIG. 7b is a diagram of a process of residual non-linear transformation processing with an attention mechanism. As shown in FIG. 7b, in this embodiment of this application, the non-linear transformation processing includes the first convolution processing, the second convolution processing, the element-wise multiplication operation, and the element-wise addition operation.

In this embodiment of this application, for the first convolution processing, the second convolution processing, and the element-wise multiplication operation, refer to the descriptions in the embodiment shown in FIG. 7a. Details are not described herein again.

After the fourth image feature is obtained, the element-wise addition operation is performed on a plurality of corresponding feature values in the first image feature and the fourth image feature, that is, element-wise addition is performed on an input of the non-linear transformation processing and an output of the element-wise multiplication operation, which may be represented by the following formula:

$$\mathrm{sum}(i,j) = a(i,j) + c(i,j),$$

where

(i, j) represents an index of a feature value in an image feature in which the feature value is located, a(i, j) represents a feature value in the first image feature, c(i, j) represents a feature value in the fourth image feature, and sum(i, j) represents a feature value in the processed image feature.

The element-wise addition operation is a residual structure with first bit addition, so that an encoding and decoding network that uses the foregoing processing process can converge easily during training.

Optionally, a size of a matrix corresponding to the fourth image feature is the same as a size of a matrix corresponding to the first image feature.

Based on a same reason as the third image feature, a size of the fourth image feature may be the same as a size of the first image feature, and correspondingly, an element in the matrix corresponding to the fourth image feature one-to-one corresponds to an element in the matrix corresponding to the first image feature. In this case, in the element-wise addition operation, element values at a same location are added, to obtain a final element value at the location.

Optionally, a size of a matrix corresponding to the fourth image feature is different from a size of a matrix corresponding to the first image feature.

Based on a same reason as the third image feature, a size of the fourth image feature may be different from a size of the first image feature, and correspondingly, an element in the matrix corresponding to the fourth image feature does not one-to-one correspond to an element in the matrix corresponding to the first image feature. In this case, in the element-wise addition operation, only element values at a same location are added, to obtain a final element value at the location, and original values are retained for elements that do not correspond to each other and that are at a same location.

The process of the non-linear transformation processing in this embodiment may be represented by the following formula:

$$y = x + x * Conv_2\big(Conv_1(x)\big),$$

where

x represents the first image feature, $Conv_1(x)$ represents the second image feature, $Conv_2(Conv_1(x))$ represents the third image feature, $x * Conv_2(Conv_1(x))$ represents the fourth image feature, and y represents the processed image feature.

In a possible implementation, a process of the non-linear transformation processing may include: performing the first convolution processing on the first image feature to obtain a second image feature; performing first activation processing on the second image feature to obtain a fifth image feature; performing the second convolution processing on the fifth image feature to obtain a sixth image feature; and performing the element-wise multiplication operation on the first image feature and the sixth image feature to obtain the processed image feature.

FIG. 7c is a diagram of a process of non-linear transformation processing with an attention mechanism. As shown in FIG. 7c, in this embodiment of this application, the non-linear transformation processing includes the first convolution processing, the first activation processing, the second convolution processing, and the element-wise multiplication operation.

The first activation processing is a non-linear operation performed on each feature value in the second image feature obtained through the first convolution processing, and may include but is not limited to an absolute value operation, a rectified linear unit (Rectified Linear Unit, ReLU) processing series, Sigmoid, Tanh, an identity operation (Identity), parametric rectified linear unit (Parametric Rectified Linear Unit, PReLU) processing, or the like.

The absolute value operation is to obtain an absolute value of an input feature value. This may be represented by the following formula:

$$y = |x| = \begin{cases} x, x \geq 0 \\ -x, x < 0 \end{cases}$$

Identity is to obtain an original value of an input feature value. This may be represented by the following formula:

$$y = x$$

Piecewise linear mapping includes rectified linear unit (ReLU) processing or leaky rectified linear unit (LeakyReLU) processing. ReLU is a piecewise linear mapping manner. For an input feature value, if the feature value is less than 0, the feature value is output as 0; or if the feature value is greater than or equal to 0, the feature value is output as itself. This may be represented by the following formula:

$$y = \text{Relu}(x) = \begin{cases} x, x \geq 0 \\ 0, x < 0 \end{cases}$$

LeakyReLU is a piecewise linear mapping manner. Based on ReLU, an input feature value less than 0 is scaled based on a preset weight, and the weight is usually 0.01. This may be represented by the following formula:

$$y = \text{LeakyReLU}(x) = \begin{cases} x, x \geq 0 \\ ax, x < 0 \end{cases},$$

where

a represents a preset value, and is usually set to 0.01.

A definition of PReLU is similar to that of LeakyReLU.

$$y = \text{PReLU}(x) = \begin{cases} x, x \geq 0 \\ ax, x < 0 \end{cases}$$

Different from LeakyReLU, a is a trainable parameter and can be obtained through training.

Sigmoid may be represented by the following operation:

$$y = \text{Sigmoid}(x) = \frac{1}{1 + e^{-x}}$$

Tanh may be represented by the following operation:

$$y = \tanh(x) = \frac{e^x - e^{-x}}{e^x + e^{-x}}$$

It should be noted that the piecewise linear mapping may alternatively use another variant manner of ReLU, or may use another new first activation processing manner. This is not specifically limited in embodiments of this application.

The second image feature is converted into the fifth image feature through the first activation processing. The fifth image feature may also be represented in a form of a matrix like the first image feature. Because the first activation processing is performed on each feature value in the second image feature, each feature value in the second image feature has a corresponding feature value in the fifth image feature. Therefore, a size of a matrix corresponding to the fifth image feature is the same as that of a matrix corresponding to the second image feature, and feature values (values of matrix elements) at a same location correspond to each other. For example, if the second image feature is represented as a 3×3 matrix like the matrix A, the fifth image feature may also be represented as a 3×3 matrix. However, because the first activation processing is performed on the second image feature and the fifth image feature, feature values in the second image feature and the fifth image feature are not completely the same. Correspondingly, element values in matrices corresponding to the second image feature and the fifth image feature are also not completely the same.

In this embodiment of this application, except for the first activation processing, for the first convolution processing, the second convolution processing, and the element-wise multiplication operation, refer to the descriptions in the embodiment shown in FIG. 7a. Details are not described herein again.

The process of the non-linear transformation processing in this embodiment may be represented by the following formula:

$$y = x * Conv_2\Big(\phi_1\big(Conv_1(x)\big)\Big),$$

where

x represents the first image feature, $Conv_1(x)$ represents the second image feature, $\phi_1(Conv_1(x))$ represents the fifth image feature, $Conv_2(\phi_1(Conv_1(x)))$ represents the sixth image feature, and y represents the processed image feature.

In a possible implementation, a process of the non-linear transformation processing may include: performing the first convolution processing on the first image feature to obtain a second image feature; performing first activation processing on the second image feature to obtain a fifth image feature; performing the second convolution processing on the fifth image feature to obtain a sixth image feature; performing the element-wise multiplication operation on the first image feature and the sixth image feature to obtain a seventh image feature; and performing an element-wise addition operation on the first image feature and the seventh image feature to obtain the processed image feature.

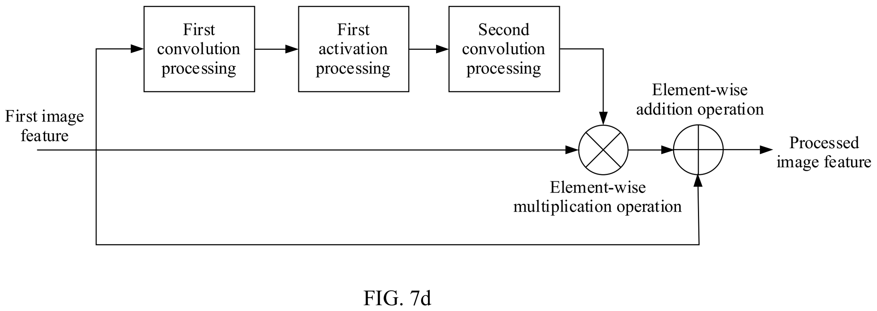

FIG. 7d is a diagram of a process of residual non-linear transformation processing with an attention mechanism. As shown in FIG. 7d, in this embodiment of this application, the non-linear transformation processing includes the first convolution processing, the first activation processing, the second convolution processing, the element-wise multiplication operation, and the element-wise addition operation.

In this embodiment of this application, for the first convolution processing, the second convolution processing, and the element-wise multiplication operation, refer to the descriptions in the embodiment shown in FIG. 7a; for the element-wise addition operation, refer to the descriptions in the embodiment shown in FIG. 7b; and for the first activation processing, refer to the descriptions in the embodiment shown in FIG. 7c.

The process of the non-linear transformation processing in this embodiment may be represented by the following formula:

$$y = x + x * Conv_2\Big(\phi_1\big(Conv_1(x)\big)\Big),$$

where

x represents the first image feature, $Conv_1(x)$ represents the second image feature, $\phi_1(Conv_1(x))$ represents the fifth image feature, $Conv_2(\phi_1(Conv_1(x)))$ represents the sixth image feature, $x * Conv_2(\phi_1(Conv_1(x)))$ represents the seventh image feature, and y represents the processed image feature.

In a possible implementation, a process of the non-linear transformation processing may include: performing the first convolution processing on the first image feature to obtain a second image feature; performing first activation processing on the second image feature to obtain a fifth image feature; performing the second convolution processing on the fifth image feature to obtain a sixth image feature; performing second activation processing on the sixth image feature to obtain an eighth image feature; and performing the element-wise multiplication operation on the first image feature and the eighth image feature to obtain the processed image feature.

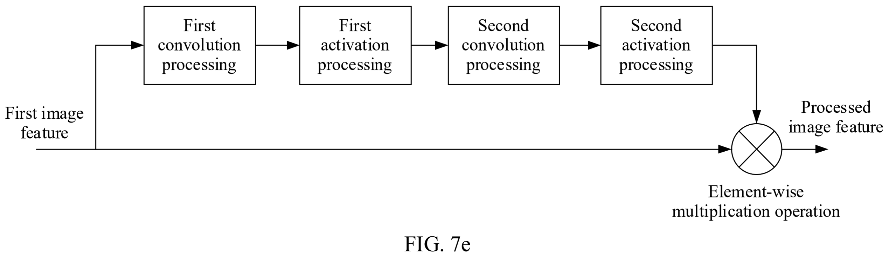

FIG. 7e is a diagram of a process of non-linear transformation processing with an attention mechanism. As shown in FIG. 7e, in this embodiment of this application, the non-linear transformation processing includes the first convolution processing, the first activation processing, the second convolution processing, the second activation processing, and the element-wise multiplication operation.

In this embodiment of this application, for the first convolution processing, the second convolution processing, and the element-wise multiplication operation, refer to the descriptions in the embodiment shown in FIG. 7a; and for the first activation processing and the second activation processing, refer to the descriptions in the embodiment shown in FIG. 7c.

The process of the non-linear transformation processing in this embodiment may be represented by the following formula:

$$y = x * \phi_2\Big(Conv_2\big(\phi_1\big(Conv_1(x)\big)\big)\Big),$$

where

x represents the first image feature, $Conv_1(x)$ represents the second image feature, $\phi_1(Conv_1(x))$ represents the fifth image feature, $Conv_2(\phi_1(Conv_1(x)))$ represents the

sixth image feature, $\phi_2(Conv_2(\phi_1(Conv_1(x))))$ represents the eighth image feature, and y represents the processed image feature.

In a possible implementation, a process of the non-linear transformation processing may include: performing the first convolution processing on the first image feature to obtain a second image feature; performing first activation processing on the second image feature to obtain a fifth image feature; performing the second convolution processing on the fifth image feature to obtain a sixth image feature; performing second activation processing on the sixth image feature to obtain an eighth image feature; performing the element-wise multiplication operation on the first image feature and the eighth image feature to obtain a ninth image feature; and performing an element-wise addition operation on the first image feature and the ninth image feature to obtain the processed image feature.

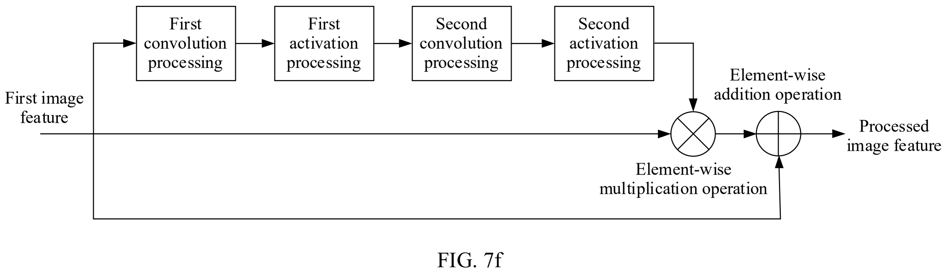

FIG. 7f is a diagram of a process of residual non-linear transformation processing with an attention mechanism. As shown in FIG. 7f, in this embodiment of this application, the non-linear transformation processing includes the first convolution processing, the first activation processing, the second convolution processing, the second activation processing, the element-wise multiplication operation, and the element-wise addition operation.

In this embodiment of this application, for the first convolution processing, the second convolution processing, and the element-wise multiplication operation, refer to the descriptions in the embodiment shown in FIG. 7a; for the element-wise addition operation, refer to the descriptions in the embodiment shown in FIG. 7b; and for the first activation processing and the second activation processing, refer to the descriptions in the embodiment shown in FIG. 7c.

The process of the non-linear transformation processing in this embodiment may be represented by the following formula:

$$y = x + x * \phi_2\left(Conv_2\left(\phi_1\big(Conv_1(x)\big)\right)\right)$$

, where
x represents the first image feature, $Conv_1(x)$ represents the second image feature, $\phi_1(Conv_1(x))$ represents the fifth image feature, $Conv_2(\phi_1(Conv_1(x)))$ represents the sixth image feature, $\phi_2(Conv_2(\phi_1(Conv_1(x))))$ represents the eighth image feature, $x * \phi_2(Conv_2(\phi_1(Conv_1(x))))$ represents the ninth image feature, and y represents the processed image feature.

In this embodiment of this application, channel-adaptive non-linear transformation processing is implemented by using an operation of combining two layers of convolution processing and activation processing.

It should be noted that the embodiments shown in FIG. 7a to FIG. 7f are merely used as several examples of the non-linear transformation processing, but do not constitute a limitation on a process of the non-linear transformation processing. In some possible implementations, the non-linear transformation processing may further include more activation processing and convolution processing. For example, after the second activation processing in the embodiments shown in FIG. 7e and FIG. 7f, the non-linear transformation processing may further include third convolution processing, third convolution processing and third activation processing, or the like. The process of the non-linear transformation processing is not specifically limited in embodiments of this application.

On the encoder side, encoding may be performed based on the processed image feature to obtain a bitstream.

After the processed image feature is obtained, the encoder side may continue to perform convolution processing on the processed image feature, or may perform non-linear transformation processing on an output of the convolution processing again after the convolution processing, and then perform entropy encoding on a result of the foregoing processing to obtain a bitstream. The entropy encoding may be implemented by using the entropy encoding network in the foregoing embodiment. Details are not described herein again. Alternatively, the result of the foregoing processing may be encoded in another encoding manner to obtain the bitstream. This is not limited in this application.

On the decoder side, a reconstructed image may be obtained based on the processed image feature.

After the processed image feature is obtained, the decoder side may also continue to perform convolution processing on the processed image feature, or may perform non-linear transformation processing on an output of the convolution processing again after the convolution processing, to convert the processed image feature from a feature domain to an image domain, to obtain the reconstructed image.

In this embodiment of this application, non-linear transformation processing in image compression is changed, and convolution processing is performed for a plurality of times, so that a receptive field can be expanded, or a calculation amount is reduced when a receptive field remains unchanged, thereby further enhancing local attention, maintaining model performance, and effectively balancing computing power.

The following describes the foregoing non-linear processing method for image compression by using several specific embodiments.

Embodiment 1

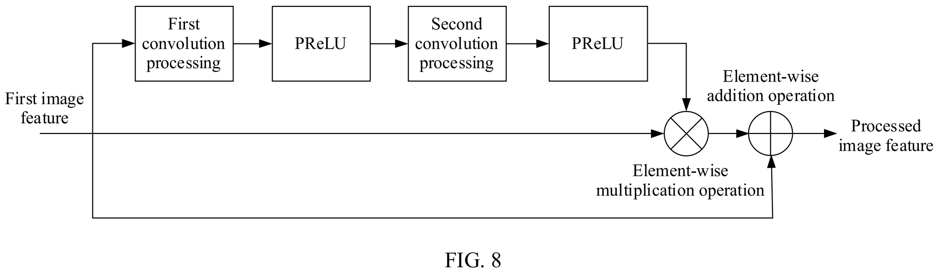

The quantity of input channels and the quantity of output channels for the first convolution processing meet chs=mid_chs. Both the first activation processing and the second activation processing may be set to PReLU with a learnable parameter. Refer to FIG. 8 (FIG. 8 is a diagram of residual non-linear transformation processing with an attention mechanism).

Embodiment 2

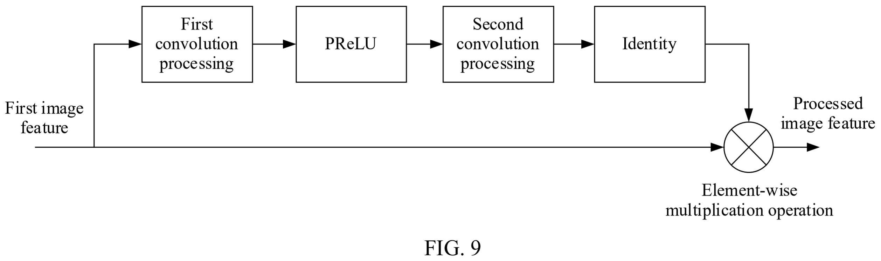

The quantity of input channels and the quantity of output channels for the first convolution processing meet chs=mid_chs. The first activation processing may be set to PReLU with a learnable parameter, and the second activation processing may be set to fixed Identity. Refer to FIG. 9 (FIG. 9 is a diagram of non-linear transformation processing with an attention mechanism).

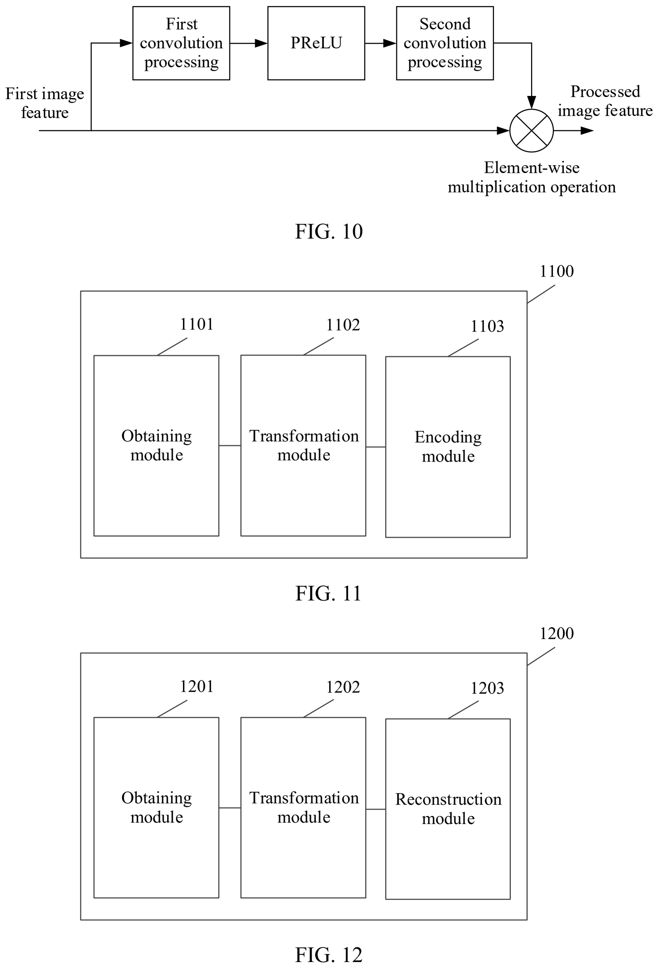

In this embodiment, the second activation processing is set to fixed Identity. Because Identity is to obtain an original value, a processing process shown in FIG. 9 may be transformed, that is, as shown in FIG. 10 (FIG. 10 is a diagram of non-linear transformation processing with an attention mechanism), the second activation processing is removed, and a process of the non-linear transformation processing is similar to that in FIG. 7c.

Embodiment 3

The quantity of input channels and the quantity of output channels for the first convolution processing meet chs=2×mid_chs. Both the first activation processing and the second activation processing may be set to PReLU with a learnable parameter. Refer to FIG. 8.

Embodiment 4

The quantity of input channels and the quantity of output channels for the first convolution processing meet chs=2×mid_chs. The first activation processing may be set to PReLU with a learnable parameter, and the second activation processing may be set to fixed Identity. Refer to FIG. 9 or FIG. 10.

FIG. 11 is an example diagram of a structure of an encoding apparatus 1100 according to an embodiment of this application. As shown in FIG. 11, the apparatus 1100 in this embodiment may be used on an encoder side. The apparatus 1100 may include an obtaining module 1101, a transformation module 1102, and an encoding module 1103, where the obtaining module 1101 is configured to obtain a to-be-processed first image feature; and the transformation module 1102 is configured to perform non-linear transformation processing on the first image feature to obtain a processed image feature, where the non-linear transformation processing sequentially includes first convolution processing, second convolution processing, and an element-wise multiplication operation.

In a possible implementation, the non-linear transformation processing further includes an element-wise addition operation after the element-wise multiplication operation.

In a possible implementation, the non-linear transformation processing further includes first activation processing after the first convolution processing.

In a possible implementation, the non-linear transformation processing further includes second activation processing after the second convolution processing.

In a possible implementation, the first activation processing and the second activation processing each include an identity Identity operation, rectified linear unit ReLU processing, leaky rectified linear unit LeakyReLU processing, or parametric rectified linear unit PReLU processing.

In a possible implementation, the transformation module 1102 is specifically configured to: perform the first convolution processing on the first image feature to obtain a second image feature; perform the second convolution processing on the second image feature to obtain a third image feature; and perform the element-wise multiplication operation on the first image feature and the third image feature to obtain the processed image feature.

In a possible implementation, the transformation module 1102 is specifically configured to: perform the first convolution processing on the first image feature to obtain a second image feature; perform the second convolution processing on the second image feature to obtain a third image feature; perform the element-wise multiplication operation on the first image feature and the third image feature to obtain a fourth image feature; and perform the element-wise addition operation on the first image feature and the fourth image feature to obtain the processed image feature.

In a possible implementation, the first convolution processing and the second convolution processing meet the following condition:

$$1 <= mid\_chs <= chs, \text{ where}$$

mid_chs represents a quantity of output channels for the first convolution processing or a quantity of input channels for the second convolution processing; and chs represents a quantity of input channels for the first convolution processing or a quantity of output channels for the second convolution processing.

In a possible implementation, chs=mid_chs; or chs=2×mid_chs.

In a possible implementation, a convolution kernel size for the first convolution processing is the same as or different from a convolution kernel size for the second convolution processing.

In a possible implementation, the encoding module 1103 is configured to perform encoding based on the processed image feature to obtain a bitstream.

The apparatus in this embodiment may be configured to execute the technical solution of the method embodiment shown in FIG. 6. An implementation principle and technical effects of the apparatus are similar to those of the technical solution of the method embodiment shown in FIG. 6. Details are not described herein again.

FIG. 12 is an example diagram of a structure of a decoding apparatus 1200 according to an embodiment of this application. As shown in FIG. 12, the apparatus 1200 in this embodiment may be used on a decoder side. The apparatus 1200 may include an obtaining module 1201, a transformation module 1202, and a reconstruction module 1203, where

the obtaining module 1201 is configured to obtain a to-be-processed first image feature; and the transformation module 1202 is configured to perform non-linear transformation processing on the first image feature to obtain a processed image feature, where the non-linear transformation processing sequentially includes first convolution processing, second convolution processing, and an element-wise multiplication operation.

In a possible implementation, the non-linear transformation processing further includes an element-wise addition operation after the element-wise multiplication operation.

In a possible implementation, the non-linear transformation processing further includes first activation processing after the first convolution processing.

In a possible implementation, the non-linear transformation processing further includes second activation processing after the second convolution processing.

In a possible implementation, the first activation processing and the second activation processing each include an identity Identity operation, rectified linear unit ReLU processing, leaky rectified linear unit LeakyReLU processing, or parametric rectified linear unit PReLU processing.

In a possible implementation, the transformation module 1202 is specifically configured to: perform the first convolution processing on the first image feature to obtain a second image feature; perform the second convolution processing on the second image feature to obtain a third image feature; and perform the element-wise multiplication operation on the first image feature and the third image feature to obtain the processed image feature.

In a possible implementation, the transformation module 1202 is specifically configured to: perform the first convolution processing on the first image feature to obtain a second image feature; perform the second convolution processing on the second image feature to obtain a third image feature; perform the element-wise multiplication operation on the first image feature and the third image feature to obtain a fourth image feature; and perform the element-wise addition operation on the first image feature and the fourth image feature to obtain the processed image feature.

In a possible implementation, the first convolution processing and the second convolution processing meet the following condition:

$$1 <= mid\_chs <= chs,$$

where

mid chs represents a quantity of output channels for the first convolution processing or a quantity of input channels for the second convolution processing; and chs represents a quantity of input channels for the first convolution processing or a quantity of output channels for the second convolution processing.

In a possible implementation, chs=mid_chs; or chs=2×mid_chs.

In a possible implementation, a convolution kernel size for the first convolution processing is the same as or different from a convolution kernel size for the second convolution processing.

In a possible implementation, the reconstruction module 1203 is configured to obtain a reconstructed image based on the processed image feature.

The apparatus in this embodiment may be configured to execute the technical solution of the method embodiment shown in FIG. 6. An implementation principle and technical effects of the apparatus are similar to those of the technical solution of the method embodiment shown in FIG. 6. Details are not described herein again.

In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that, the units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the foregoing described apparatus embodiments are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, and may be located at one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. Alternatively, the computer software product may be transferred from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk (SSD), a read-only memory (read-only memory, ROM), or a random access memory (random access memory, RAM)), or the like.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A non-linear processing method for image compression, comprising:

   obtaining a to-be-processed first image feature; and
   performing non-linear transformation processing on the first image feature to obtain a processed image feature, wherein the non-linear transformation processing sequentially comprises first convolution processing, second convolution processing, and an element-wise multiplication operation.

2. The method according to claim 1, wherein the non-linear transformation processing further comprises an element-wise addition operation after the element-wise multiplication operation.

3. The method according to claim 1 or 2, wherein the non-linear transformation processing further comprises first activation processing after the first convolution processing.

4. The method according to claim 3, wherein the non-linear transformation processing further comprises second activation processing after the second convolution processing.

5. The method according to claim 4, wherein the first activation processing and the second activation processing respectively comprise an identity operation Identity, rectified linear unit ReLU processing, leaky rectified linear unit LeakyReLU processing, or parametric rectified linear unit PReLU processing.

6. The method according to claim 1, wherein performing the non-linear transformation processing on the first image feature to obtain the processed image feature comprises:

   performing the first convolution processing on the first image feature to obtain a second image feature;
   performing the second convolution processing on the second image feature to obtain a third image feature; and
   performing the element-wise multiplication operation on the first image feature and the third image feature to obtain the processed image feature.

7. The method according to claim 2, wherein performing the non-linear transformation processing on the first image feature to obtain the processed image feature comprises:

   performing the first convolution processing on the first image feature to obtain a second image feature;
   performing the second convolution processing on the second image feature to obtain a third image feature;
   performing the element-wise multiplication operation on the first image feature and the third image feature to obtain a fourth image feature; and
performing the element-wise addition operation on the first image feature and the fourth image feature to obtain the processed image feature.

8. The method according to any one of claims 1 to 7, wherein the first convolution processing and the second convolution processing meet the following condition:

$$1<=mid\_chs<=chs,$$

   wherein
   mid chs represents a quantity of output channels for the first convolution processing or a quantity of input channels for the second convolution processing; and chs represents a quantity of input channels for the first convolution processing or a quantity of output channels for the second convolution processing.

9. The method according to claim 8, wherein chs=mid _chs; or chs=2×mid_chs.

10. The method according to any one of claims 1 to 9, wherein a convolution kernel size of the first convolution processing is the same as or different from a convolution kernel size of the second convolution processing.

11. The method according to any one of claims 1 to 10, wherein after performing the non-linear transformation processing on the first image feature to obtain the processed image feature, further comprising:
performing encoding based on the processed image feature to obtain a bitstream.

12. The method according to any one of claims 1 to 10, wherein after performing the non-linear transformation processing on the first image feature to obtain the processed image feature, further comprising:
obtaining a reconstructed image based on the processed image feature.

13. A non-linear processing apparatus for image compression, comprising:

   an obtaining module, configured to obtain a to-be-processed first image feature; and
   a transformation module, configured to perform non-linear transformation processing on the first image feature to obtain a processed image feature, wherein the non-linear transformation processing sequentially comprises first convolution processing, second convolution processing, and an element-wise multiplication operation.

**14.** The apparatus according to claim 13, wherein the non-linear transformation processing further comprises an element-wise addition operation after the element-wise multiplication operation.

**15.** The apparatus according to claim 13 or 14, wherein the non-linear transformation processing further comprises first activation processing after the first convolution processing.

**16.** The apparatus according to claim 15, wherein the non-linear transformation processing further comprises second activation processing after the second convolution processing.

**17.** The apparatus according to claim 16, wherein the first activation processing and the second activation processing respectively comprise an identity operation Identity, rectified linear unit ReLU processing, leaky rectified linear unit LeakyReLU processing, or parametric rectified linear unit PReLU processing.

**18.** The apparatus according to claim 13, wherein the transformation module is specifically configured to: perform the first convolution processing on the first image feature to obtain a second image feature; perform the second convolution processing on the second image feature to obtain a third image feature; and perform the element-wise multiplication operation on the first image feature and the third image feature to obtain the processed image feature.

**19.** The apparatus according to claim 14, wherein the transformation module is specifically configured to: perform the first convolution processing on the first image feature to obtain a second image feature; perform the second convolution processing on the second image feature to obtain a third image feature; perform the element-wise multiplication operation on the first image feature and the third image feature to obtain a fourth image feature; and perform the element-wise addition operation on the first image feature and the fourth image feature to obtain the processed image feature.

**20.** The apparatus according to any one of claims 13 to 19, wherein the first convolution processing and the second convolution processing meet the following condition:

$$1<=mid\_chs<=chs,$$

wherein mid chs represents a quantity of output channels for the first convolution processing or a quantity of input channels for the second convolution processing; and chs represents a quantity of input channels for the first convolution processing or a quantity of output channels for the second convolution processing.

**21.** The apparatus according to claim 20, wherein chs=mid_chs; or chs=2×mid_chs.

**22.** The apparatus according to any one of claims 13 to 21, wherein a convolution kernel size for the first convolution processing is the same as or different from a convolution kernel size for the second convolution processing.

**23.** An encoder, comprising:

one or more processors; and a non-transitory computer-readable storage medium, coupled to the processor and storing a program for execution by the processor, wherein when the program is executed by the processor, the decoder is enabled to perform the method according to any one of claims 1 to 11.

**24.** A decoder, comprising:

one or more processors; and a non-transitory computer-readable storage medium, coupled to the processor and storing a program for execution by the processor, wherein when the program is executed by the processor, the decoder is enabled to perform the method according to any one of claims 1 to 10, and 12.

**25.** A computer program product, comprising program code, wherein when the program code is executed on a computer or a processor, the method according to any one of claims 1 to 12 is performed.

**26.** A computer-readable storage medium, comprising instructions, wherein when the instructions are run on a computer, the computer is enabled to perform the method according to any one of claims 1 to 12.

Original image

Reconstructed image

FIG. 1

EP 4 693 167 A1

EP 4 693 167 A1

FIG. 2

Camera → Image/Video → AI image/video encoding → Storage/ Transmission → AI image/video decoding → Reconstructed image/video

FIG. 3

FIG. 4

EP 4 693 167 A1

Terminal | Cloud

Original image

Compression process

| JPEG encoding | → Upload → | JPEG decoding | → | AI encoding unit | → | Entropy estimation unit | → | Entropy encoding | → | Store a file |
|---|---|---|---|---|---|---|
| CPU | | CPU | | GPU | | NPU | | CPU | | CPU |

File

Decompression process

| JPEG decoding | ← Download ← | JPEG encoding | ← | AI decoding unit | ← | Entropy decoding | ← | Entropy estimation unit | ← | Load the file |
|---|---|---|---|---|---|---|
| CPU | | CPU | | GPU | | CPU | | NPU | | CPU |

Terminal display

FIG. 5

600

| Obtain a to-be-processed first image feature | 601 |

↓

| Perform non-linear transformation processing on the first image feature to obtain a processed image feature, where the non-linear transformation processing sequentially includes first convolution processing, second convolution processing, and an element-wise multiplication operation | 602 |

FIG. 6

FIG. 7a

First image feature → First convolution processing → Second convolution processing

Element-wise addition operation

Element-wise multiplication operation

Processed image feature

**FIG. 7b**

First image feature → First convolution processing → First activation processing → Second convolution processing

Processed image feature

Element-wise multiplication operation

**FIG. 7c**

First image feature

First convolution processing

First activation processing

Second convolution processing

Element-wise multiplication operation

Element-wise addition operation

Processed image feature

FIG. 7d

First image feature → First convolution processing → First activation processing → Second convolution processing → Second activation processing → ⊗ → Processed image feature

⊗ = Element-wise multiplication operation

FIG. 7e

FIG. 7f

FIG. 8

```
┌──────────────┐     ┌─────────┐     ┌──────────────┐     ┌──────────┐
│    First     │     │         │     │    Second    │     │          │
│ convolution  │ ──> │  PReLU  │ ──> │ convolution  │ ──> │ Identity │
│  processing  │     │         │     │  processing  │     │          │
└──────────────┘     └─────────┘     └──────────────┘     └──────────┘
```

First image feature

Processed image feature

Element-wise multiplication operation

FIG. 9

First image feature → First convolution processing → PReLU → Second convolution processing → Processed image feature

Element-wise multiplication operation

FIG. 10

1100

1101 1102 1103

| Obtaining module | Transformation module | Encoding module |

FIG. 11

1200

1201 1202 1203

| Obtaining module | Transformation module | Reconstruction module |

FIG. 12

## INTERNATIONAL SEARCH REPORT

| International application No. |
| --- |
| **PCT/CN2024/096013** |

**A.    CLASSIFICATION OF SUBJECT MATTER**

G06T5/50(2006.01)i

According to International Patent Classification (IPC) or to both national classification and IPC

**B.    FIELDS SEARCHED**

Minimum documentation searched (classification system followed by classification symbols)

IPC: G06T; H04N

Documentation searched other than minimum documentation to the extent that such documents are included in the fields searched

Electronic data base consulted during the international search (name of data base and, where practicable, search terms used)

CNKI, CNTXT, VEN, USTXT, EPTXT, IEEE: 图像, 非线性, 压缩, 卷积, 通道, 相乘, 相加, image, non-linear, compression, convolution, channel, multiplication, addition

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113949867 A (WUHAN TCL GROUP INDUSTRIAL RESEARCH INSTITUTE CO., LTD.) 18 January 2022 (2022-01-18)<br>description, paragraphs [0030]-[0085], and figures 1-6 | 1-26 |
| A | CN 111008924 A (XI'AN JIAOTONG UNIVERSITY SHENZHEN RESEARCH INSTITUTE) 14 April 2020 (2020-04-14)<br>entire document | 1-26 |
| A | WO 2019143026 A1 (KOREA ADVANCED INSTITUTE OF SCIENCE AND TECHNOLOGY) 25 July 2019 (2019-07-25)<br>entire document | 1-26 |
| A | US 2022329807 A1 (WUHAN TCL CORPORATE RESEARCH CO., LTD.) 13 October 2022 (2022-10-13)<br>entire document | 1-26 |

☐ Further documents are listed in the continuation of Box C.    ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 August 2024** | **27 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/096013**

| Patent document cited in search report | | | Publication date (day/month/year) | Patent family member(s) | | | Publication date (day/month/year) |
|---|---|---|---|---|---|---|---|
| CN | 113949867 | A | 18 January 2022 | None | | | |
| CN | 111008924 | A | 14 April 2020 | None | | | |
| WO | 2019143026 | A1 | 25 July 2019 | US | 2023216986 | A1 | 06 July 2023 |
| | | | | KR | 20190087264 | A | 24 July 2019 |
| | | | | US | 2021065334 | A1 | 04 March 2021 |
| US | 2022329807 | A1 | 13 October 2022 | EP | 4087239 | A1 | 09 November 2022 |
| | | | | WO | 2021135715 | A1 | 08 July 2021 |
| | | | | CN | 113132723 | A | 16 July 2021 |

Form PCT/ISA/210 (patent family annex) (July 2022)